# EUROPEAN PATENT SPECIFICATION

(11) **EP 1 368 597 B1**
(45) Date of publication and mention of the grant of the patent: **11.01.2006**
(21) Application number: 02717059.6
(22) Date of filing: 13.03.2002
(51) Int. Cl.: F24J 2/00

(54) **SOLAR ENERGY PLANT**
SONNENKRAFTWERK
CENTRALE D'ENERGIE SOLAIRE

(30) Priority: 14.03.2001 IT RM20010131
(43) Date of publication of application: 10.12.2003
(73) Proprietor: Borra, Libero, 00045 Nettuno (IT)
(72) Inventor: Borra, Libero, 00045 Nettuno (IT)
(74) Representative: Papa, Elisabetta
(86) International application number: PCT/IT2002/000155
(87) International publication number: WO 2002/073098

(56) References cited:
- DE-A- 3 505 532
- DE-A- 10 011 052
- US-A- 4 089 174
- US-A- 4 135 489
- US-A- 4 220 140
- US-A- 4 333 446

## Description

The present invention refers to a system of focusing solar energy, comprising a reflecting member shaped so as to focus the incident radiation on a focus region of the system, particularly light-weight, autonomous in the following of the Sun.

Several of said members can be placed side by side to cover wide spaces.

According to the same inventive concept, the present invention further refers to a thermal plant comprising said system of focusing and to a method for the production of superheated water (hypercritical fluid) to convey the concentrated solar energy directly to a turbine, to a hot-air motor for the production of electric energy, to an injector for pumping water, to a heat exchanger for accumulating energy, and so on.

Over the latest years, worldwide the study of plants for the production of electric energy based on the so-called 'alternative sources' to fossil fuel has been boosted, above all solar radiation.

However, considerable resources invested therefor notwithstanding, the development of plants implementing a satisfactory compromise between efficiency, bulk and simplicity of construction is still to come.

GB 1 590 091 discloses a solar energy conversion system using a working fluid which is maintained at high pressure to prohibit vaporization. The fluid is then permitted to vaporize for operating, for example, a turbine. The system has a primary and a secondary mirror rigidly connected one to the other by struts and jointly rotatable about a diurnal axis coinciding with lower stationary pipes.

The technical problem underlying the present invention is to provide a solar energy plant and a related method enabling to overcome the drawbacks hereto mentioned with reference to the known art.

This problem is solved by a plant according to claim 1.

The present invention provides several relevant advantages.

The main advantage lies in that the system of focusing of the invention and the related thermal plant are extremely simple and cost-effective to implement.

Other advantages, features and operation modes of the present invention will be made apparent in the following detailed description of some embodiments thereof, given by way of a non-limiting example. Reference will be made to the figures of the accompanying drawings, wherein:
Figure 1 schematically shows an embodiment of the plant according to the present invention;
Figure 2 is a perspective view of a reflecting member of the plant of Figure 1;
Figures 3A and 3B are a front and a side view, respectively, of a detail of the heat exchanger of the plant of Figure 1; and
Figure 4 is a partially sectional front view of a detail of a temperature regulator of the plant of Figure 1.

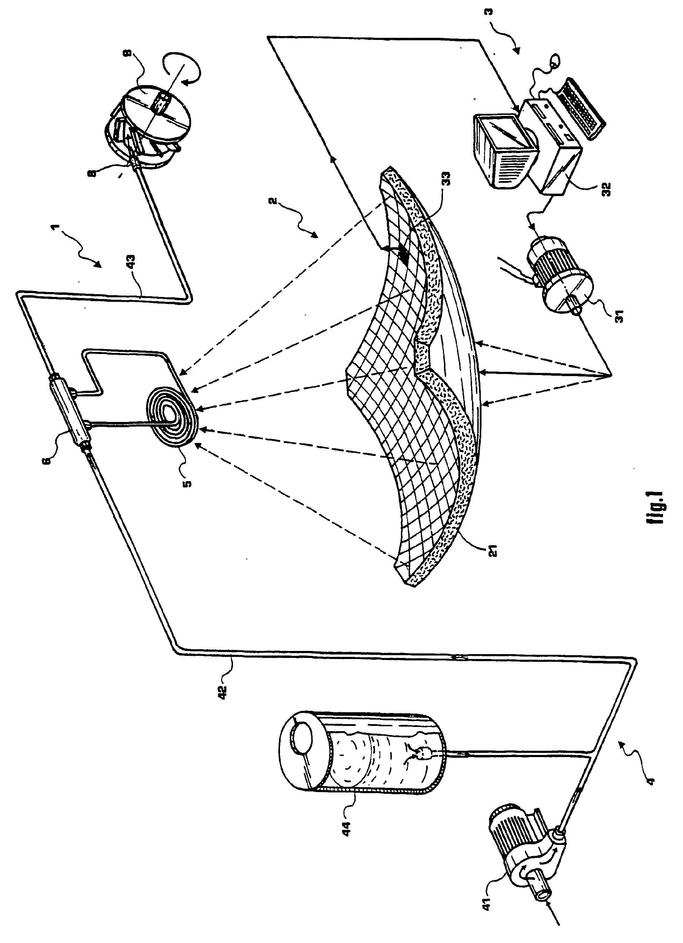

With initial reference to Figure 1, a plant for the exploitation of the radiant thermal energy of solar origin is generally indicated with 1. In particular, the plant 1 of the present embodiment is designed to convert solar energy into thermal energy in the hypercritical fluid which will directly actuate a turbine, a turboalternator, etc.

According to the invention, the plant 1 provides a system of focusing solar radiation, generally indicated with 2, comprising one or more reflecting members 21 apt to focus solar radiant energy in a region called system focus, the orientation system and the spiral thereof being completely autonomous in the Sun-following motions, oscillating about the spiral which lies at the centre of the focus. In the present embodiment, such reflecting members 21 are combined with an automatic orientation device 3.

Always according to the invention, the plant 1 further comprises means 4 for feeding a process fluid, apt to feed such fluid, under a pressure substantially equal to or greater than the critical one, to a heat exchanger 5 located in correspondence of the focus of the system 2.

Moreover, in the present embodiment the plant 1 comprises a regulator 6 of the temperature of the process fluid outletted by the heat exchanger 5.

Always in the present embodiment, the process fluid is water.

Each of the hereto introduced components will hereinafter be detailed with reference to the specific disclosed embodiment.

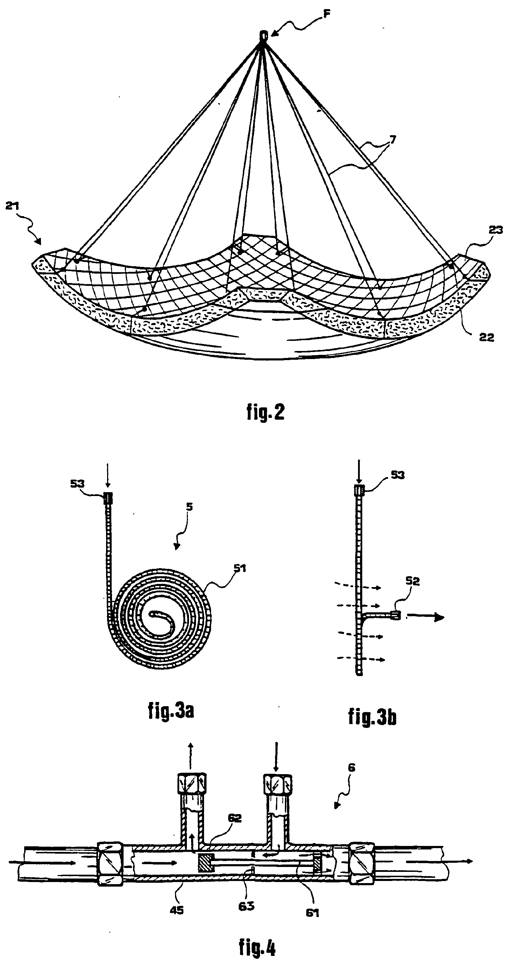

In Figure 2 a system of focusing 2 comprising a single reflecting member 21, having a substantially paraboloid-shaped surface and being apt to reflect the sunbeams in correspondence of the focus region of the system 2, indicated with F in said Figure , is depicted. It will be understood that, in the case of a faultless shaping, the focus region F will be point-shaped.

Always with reference to Figure 2, the reflecting member 21 consists of a main body 22 made of polystyrene foam or of a mechanically equivalent material coated with a reflecting metalized film 23. It will be appreciated that such construction provides reflecting members extremely light-weight, handy and of simple and rapid manufacturing, which, though independent the one from the other, can be placed side by side, whereas the spirals located in the foci thereof are parallelly connected thereamong at the inlet and at the outlet.

By way of example, the reflecting member 21 can have a surface exposed to the solar radiation of an extension equal to 16 m². Taking into account that about 1kW/(h m²) can be associated to the incident solar radiation, a reflecting member of said dimensions could be employed to provide 2÷3 kW/h of electric energy.

Always by way of example, the reflecting film 23 could have a thickness equal to about 16 µm and a specific weight equal to about 130 g/m².

Hence, overall each reflecting member will have a weight equal to about 20 or 30 kg.

Moreover, in the embodiment at issue the reflecting surface of the member 21 has a distance from its own focus equal to about 2.2 m.

As it will be well-known to a person skilled in the art, variant embodiments could provide the use of alternative materials both for the main body and for the reflecting portion. E.g., the latter could be made of silvered glass.

Analogously, differently shaped reflecting surfaces, e.g., ellipsoidal ones, could be employed.

Moreover, in lieu of said film apt to implement a continuous reflecting surface, further variant embodiments could provide the employ of several reflecting units applied on a single main body.

Since the modes of manufacturing a reflecting member will be well-known to a person skilled in the art, those will not be further detailed.

In order to follow the astronomical motion of the Sun with respect to the Earth, the reflecting member 21 is rotatably connected to supporting structures of the exchanger 5 by a ball joint connection having its centre in the ideal centre of the focus region F. In particular, the member 21 is coupled to said structures by four support tie rods 7, symmetrically fastened to the member 21 itself.

In the present embodiment said tie rods are made of iron.

Alternative embodiments can provide the action of said support tie rods to be aided by supports oscillating about two orthogonal axes or by tracks having a spherical profile apt to receive the reflecting member 21.

With further reference to Figure 1, the automatic orientation device 3 of the system of focusing 2 provides a substantially orthogonal pair of cables (not shown in the figures) and actuating means 31 thereof, apt to selectively tension said cables in order to rotate the member 21 about the focus F.

The actuating means in turn comprises a traditional electric motor, it also indicated with 31, controlled by a control unit 32 apt to drive the motion of the cables according to the position of the Sun with respect to the installation region of the plant 1. This motor 31 will rotate the member 21 about two substantially orthogonal axes, thereby correctly orienting North-South (N-S) and East-West (E-W) the latter. This single motor could also be replaced by two suitably located monoaxial motors.

In order to drive the cables as abovespecified, said control unit is combined with a photovoltaic transducer 33 fixed with the reflecting member 21. The transducer 33 comprises four photovoltaic cells, paired two by two. In particular, a first pair of cells has a N-S orientation, whereas a second pair has an E-W orientation. Moreover, each pair of cells is combined with a related electric circuit.

The arrangement of each pair of cells of the transducer 33 with respect to the reflecting member 21 is such that, when the latter has a non-optimal N-S or E-W orientation with respect to the direction of the incident solar radiation, the intensity of the solar radiation hitting one cell of the pair is greater than that hitting the other cell of the pair. Hence, a different electric potential will be associated with the two cells, with the entailed current flow within the circuit thereof.

According to the intensity and to the sign of this current, the control unit 32 determines the position of the Sun with respect to the system of focusing 2 and it drives the motor 31 so as to have the reflecting member 21 rotate until said potential difference is eliminated. Moreover, when the current intensity surpasses a certain preset upper threshold, indicating the orientation of the reflecting member 21 to be very far from the optimal one, the control unit 32 also drives an increase of the operative speed of the motor.

In the case of the double-motor embodiment, each motor is controlled by a sensor, and each sensor consists of two photovoltaic plaques or cells, A and B coupled according to the surface corresponding to the 'minus' sign.

Each of said sensors is perpendicularly mounted onto the surface of the reflecting member so as to have the reflecting member-Sun line pass onto the coupling surface of the two plaques. Then, when the sunbeams hit the block at its edge, A and B surfaces will be lighted likewise. Therefore, the potential difference associated with the two plaques will be nil, the current flowing in a relay connecting A to B will be zero and the relay will be at rest.

Instead, when there is no optimal alignment in the N-S or the E-W directions, e.g., supposing A to be more lighted than B, the potential associated with A will be higher than that associated with B: then a current will flow in the direction from A to B in the relay, and the latter will close the circuit of the motor. Said motor will revolve in a sense such as to make the reflecting member rotate until A and B surfaces be lighted likewise and the associated potentials be equal, thereby having the relay returning at rest.

Analogously, when the A surface is less lighted than the B surface, the current in the relay circuit flows invertedly to the preceding case, with the entailed closure of the circuit of the motor with inverted polarities and the entailed revolving thereof invertedly to the preceding situation. In this case as well, the reflecting member will rotate until the lighting of A be equal to that of B and the relay will return at rest.

According to a simplified embodiment, the control unit 32 could also consist of a simple relay associated with each of said electric circuits, the mobile member thereof being selectively moved, by electromagnetic attraction, depending on the verse of the current flowing in the related circuit, thereby driving the direction of rotation of the motor 31.

The heat exchanger 5 is based on the employ of an exchange component 51, shown in Figures 3A and 3B. The latter is substantially spiral-shaped in order to establish an optimal bulk/exchange surface compromise. In particular, the exchange component 51 provides a water inlet section 52 and a outlet section 53, both hydraulically connected to the means 4 for feeding the process fluid.

By way of example, the exchange component 51 could be an iron pipe sized so as to endure the plant operation pressures. In particular, this pipe could have an inside diameter comprised in the range of about 1÷3 mm, preferably of about 2 mm, an outside diameter comprised in a range of 5÷7 mm, preferably of about 6 mm, a length equal to about 6 m and a weight equal to 125 g/m. With said dimensions, the spiral diameter can be equal to about 400 mm, thereby yielding an overall exchange surface equal to about 1140 cm². Moreover, according to this sizing, the exchange component 51 can endure a maximal running pressure equal to about 660 kg/cm².

With further reference to Figure 1, the means 4 for feeding the process fluid comprises a hydraulic circuit fed by a pump 41, shown therein in purely exemplary terms, and apt to keep the process fluid at a running pressure which is substantially constant and substantially equal to or greater than the critical one. In the case of water, the running pressure is ≥ 225 kg/cm².

In a simple embodiment, the pump 41 is a pump, e.g., apt to reach a maximal operation pressure equal to about 450 kg/m².

Said hydraulic circuit comprises a first section 42 upstream of the exchanger 5, apt to feed the process fluid to such exchanger 5, and a second section 43 downstream thereof, apt to feed the superheated process water to an injector 8, and directly onto the vanes of a turbine 9.

Preferably, said sections 42 and 43 are both formed by pipes which have the same inside and outside diameter of that of the abovedescribed spiral exchange component 51 confluent in collectors.

It will be understood that this hydraulic circuit could be sized with traditional methodologies in order to meet the needs of any specific plant.

The first hydraulic circuit section 42 provides, upstream of the pump 41, means for filtering and purifying the feed water (not shown in the Figures).

Downstream of the pump 41, said first hydraulic circuit section 42 further comprises an air-space tank 44 for expansion and accumulation of the pressurized water in order to have an air reserve and to avoid a water/air contact during the operation period. Said expansion tank 44 is depicted merely by way of example in Figure 1. This expansion tank 44 provides an iron pipe having an inside diameter equal to about 16 mm and an outside diameter equal to about 26 mm, apt to resist to a maximal working pressure equal to about 440 kg/cm². Inside the pipe, it is located an air space which, at quiescent plant, is inflated to a pressure comprised in a range of about 2÷50 kg/cm².

As it will be well-known to a person skilled in the art, the expansion tank 44 and in particular the air space thereof should be tight-sealed in order not to lose the air cushion, which at zero pressure (quiescent plant) will fill up the entire volume of the tank and that, under operation conditions, will fill up 1/225 of the initial volume.

Said regulator 6 of the temperature of the process fluid outletted from the exchanger 5 will hereinafter be disclosed with reference to Figure 4. This regulator 6 comprises cylinder-shaped rod 61, anchored at a spot A to a duct 45 of the hydraulic circuit connecting the inlet 51 and the outlet 52 portions of the exchange component 51, associated to a shutter 62. E.g., the rod 61 could be made of iron alloy.

The shutter 62, when it is moved by the rod 61 immersed in the superheated water outletted from the exchanger 5, can vary the flow of the inletted water. A suitable diaphragm 63 lets slide the rod 61 and hinders the water flow. The components 61, 62 and 63 are immersed into the circulating water of the plant and therefore are not influenced by the pressure thereof.

Said moving of the shutter 62 is attained by virtue of the fact that the rod 61 and the duct 45 have a different thermal expansibility. The operation of the regulator 6 is based precisely on the different thermal expansion undergone by the duct 45 and the rod 61 upon coming into contact with the process fluid. In particular, this different expansion makes the length of the rod 61 vary with respect to that of the corresponding duct section 45. Hence, according to the temperature of the fluid, the rod 61 will move more or less the shutter 62, thereby regulating the flow of process fluid towards the exchange component 51 according to the desired temperature. In the presently disclosed embodiment, the duct 45 has an inside diameter of about 2 mm, and the rod 61 has an outside diameter of about 1.5 mm.

Hereinafter, the operation modes of the plant 1 of the present embodiment will be detailed.

The means 4 for feeding the process fluid provides the water circulation in the hydraulic circuit and in the exchanger 5. In particular, as abovementioned, the pump 41 keeps the process fluid at an operation pressure equal to or greater than the critical one, thereby preserving it in a liquid phase regardless of the temperature thereof, thereby being conveyable in said phase to the use location.

The radiant energy focused in the region F by the system of focusing 2 heats the process fluid flowing within the exchanger 5.

The rotatable connection of the reflecting member 21 to the focus region F, implemented by the support tie rods 7, enables the former to follow the daily and/or seasonal motions of the Sun. In particular, in the present embodiment the orientation device 3 provides the automated daily and seasonal rotation of the reflecting member 21, in order to ensure an optimal exploiting of the plant 1.

Of course, variant embodiments could provide the employ of localized flow resistance members located in the hydraulic circuit.

With the exemplary dimensions hereto indicated for the exchanger and for the system of focusing, theoretical computations show that the temperature attainable at the exchanger, for an incident solar radiation yielding 1 kW/m², could reach values ranging from about 400 to about 500°C.

A specific application of the heretodisclosed plant could provide that a plurality of exchangers and a corresponding plurality of reflecting members, e.g. having a reflecting surface with an extension comprised in a range of about 10÷20 m², be installed side-by-side, and that said exchangers be hydraulically connected in parallel to respective collectors for the feeding of the process fluid, in particular with a cold water inlet and with a superheated water outlet. To this end, it suffices to prearrange two iron tubes of suitable diameter, one thereof feeding the cold fluid and the other one thereof collecting the hated fluid serving as collector for all the reflecting members scattered over the land. Thus, large-sized surfaces can be covered, e.g., in droughty areas, deserts, on untilled, inhospitable, uneven, steep surfaces, etc.

E.g., on a desert land, there can be installed a first plurality of lines, substantially parallel and distant about 5 m the one from the other, and a corresponding second plurality of lines, them also substantially parallel thereamong and substantially orthogonal to the lines of the first plurality, arranged so as to intersect the latter. In correspondence of each intersection, there can be provided a pole, and the various poles can be connected thereamong by traverses. Thus, a substantially quadrangular mesh grid is defined. Then, in correspondence of the intersection of the diagonals of each mesh there can be provided an exchanger of the abovedescribed type, connected to the other exchangers by collectors and associated with a respective system of focusing. Each of said exchangers can e.g., manage a 30÷40 litres/h water volume.

Thus, a superheated water (or hypercritical fluid) heating plant of simple construction, provided with stable and durable hydraulic connections and requiring limited surveillance and maintenance, is implemented. In particular, in this plant the water could transport an energy equal to 1 cal per 1 kg per 1 °C of thermal head.

It will be appreciated that no scaling is caused by the water-dissolved salts.

In particular, the water for producing the hypercritical fluid can be non-depurated, as there being no evaporation, no salt concentration will ensue. In fact, said salts remain dissolved in the water itself. This proves useful in case the plant be used to pump or to distil water.

A further embodiment could provide the abovementioned injector to be used in the mid-section of a water-pumping injector.

It will presently be better appreciated that the plant of the invention implements an extremely simple and handy superheated water (or hypercritical fluid) solar heating plant, employing a light-weight and cost-effective system of focusing.

Furthermore, it will be appreciated that superheated water thermal plant of the invention does not require a control of the water level, since it is completely full, nor a control of the pressure, since it runs at a pressure equal to or greater than the critical one provided by the feeding pump. Under these conditions the water is always in a liquid state even when the temperature rises. In fact, in that case the water superheats, accumulating energy in form of heat and maintaining liquid-state features. On the contrary, the known steam thermal plants use boilers that produce steam taken from the top thereof and require a continual control of the water level and pressure, in order not to endanger the boiler, which is usually large-sized.

In short, it will by now be apparent that the main advantage of the present invention lies in that it enables a more convenient exploitation of the solar energy for industrial purposes, an exploitation so far precluded by problems of complexity, weight and cost of the known plants.

In particular, the availability of concentrated solar energy, accumulated in form of heat in the superheated water and conveyed with easily insulatable small-diameter piping to the sites of use, e.g., directly onto the vanes of a turbine, onto air-pumping injectors or on heat exchangers, and the availability of several small superheated water accumulation centres, i.e. of exchangers located at respective foci of as many systems of focusing, enable to implement an extremely simple thermal plant.

The plant of the present invention could also provide applications different from the heretodisclosed one. E.g., it could be used to heat water for civil and/or industrial uses. In that case, the hydraulic circuit could feed superheated water to the site of use and the ducts thereof be used as radiating pipes, as in a thermosiphon circuit.

Moreover, the plant could be used in combination with a heat exchanger for a hot-air rotary motor. In particular, this motor will provide a first impeller which sets in motion an air flow, an exchanger inside of the motor which heats said air, and a second impeller which, exploiting the pressure produced by the first impeller and the increase in volume produced by the exchanger, determines the propulsion thereof. The plant of the present invention can also be combined with a known hydroelectric plant. In particular, there could be two basins, a top one, representing a sort of energy reservoir, and a bottom one, collecting the discharge of a hydraulic turbine. Thus, the thermal plant of the invention transforms solar energy into hydraulic energy, pumping water by day, while the hydroelectric plant produces electric energy according to traditional modes. Hence, a closed-circuit plant is attained.

The present invention has hereto been described with reference to preferred embodiments thereof. It is understood that there may be other embodiments referable to the same inventive concept, all falling within the protective scope of the claims set forth hereinafter.

## Claims

1. A thermal plant (1) comprising: a system of focusing solar energy (2), comprising at least one reflecting member (21), shaped so as to focus an incident radiation on a focus region (F) of the system, and support tie rods (7) of said at least one reflecting member, which rods rotatably connect said reflecting member to said focus region in order to allow the reflecting member to follow the daily and/or seasonal motions of the Sun; a heat exchanger (5), located in correspondence of said focus region (F); and means (4) for feeding process water, apt to feed said water, under a pressure substantially equal to or greater than the critical one, to said exchanger.

2. The thermal plant (1) according to the preceding claim, wherein said heat exchanger (5) comprises a substantially spiral-shaped exchange component (51).

3. The thermal plant (1) according to claim 1 or 2, comprising a plurality of heat exchangers (5) connected in parallel by said means (4) for feeding process water.

4. The plant (1) according to any one of the preceding claims, combined with a heat exchanger inside a hot-air motor.

5. The plant (1) according to any one of the preceding claims, wherein said at least one reflecting member (21) comprises a main body (22) made of polystyrene foam and a reflecting film (23) applied on said main body.

6. The plant (1) according to any one of the preceding claims, comprising an automatic orientation device (3) having a pair of substantially orthogonal cables and actuating means (31) thereof, apt to selectively tension said cables in order to rotate the reflecting member (21) about said focus region (F).

7. The plant (1) according to the preceding claim, wherein said automatic orientation device (3) comprises a photovoltaic transducer (33) for driving said actuating means (31) fixed with said reflecting member (21), said transducer comprising pairs of photovoltaic sensors differently oriented and electrically connected, so that the potential difference between the cells of a pair depends on the orientation of the reflecting member with respect to the incident radiation.

8. The plant (1) according to the preceding claim, wherein said automatic orientation device (3) comprises, for each pair of cells, a relay (32), the movable member thereof being selectively moved, by electromagnetic attraction, according to said potential difference between cells.

## Patentansprüche

1. Thermische Anlage (1) mit: einem System zum Fokussieren von Solarenergie (2), das wenigstens ein reflektierendes Teil (21) umfasst, welches so geformt ist, dass einfallende Strahlung auf ein Fokusgebiet (F) des Systems fokussiert wird, und Tragzugstangen (7) des wenigstens einen reflektierenden Teils, wobei die Stangen das reflektierende Teil mit dem Fokusgebiet drehbar verbinden, um dem reflektierenden Teil zu gestatten, den täglichen und/oder jahreszeitlichen Bewegungen der Sonne zu folgen; einem Wärmetauscher (5), der entsprechend dem Fokusgebiet (F) angeordnet ist; und einer Einrichtung (4) zum Zuführen von Prozesswasser, die in der Lage ist, das Wasser unter einem Druck, der im wesentlichen gleich dem kritischen Druck oder größer als der kritische Druck ist, dem Tauscher zuzuführen.

2. Thermische Anlage (1) nach dem vorhergehenden Anspruch, wobei der Wärmetauscher (5) eine im wesentlichen spiralförmige Tauschkomponente (51) aufweist.

3. Thermische Anlage (1) nach Anspuch 1 oder 2, mit einer Vielzahl von Wärmetauschern (5), die durch die Einrichtung (4) zum Zuführen von Prozesswasser parallel geschaltet sind.

4. Anlage (1) nach einem der vorhergehenden Ansprüche, kombiniert mit einem Wärmetauscher innerhalb eines Heißluftmotors.

5. Anlage (1) nach einem der vorhergehenden Ansprüche, wobei das wenigstens eine reflektierende Teil (21) einen Hauptkörper (22) umfasst, der aus Polystyrolschaum besteht, und eine reflektierende Folie (23), die auf den Hauptkörper aufgebracht ist.

6. Anlage (1) nach einem der vorhergehenden Ansprüche, mit einer automatischen Orientierungsvorrichtung (3), die ein Paar im wesentlichen orthogonale Seile und eine Betätigungseinrichtung (31) derselben hat, welche in der Lage ist, die Seile wahlweise zu spannen, um das reflektierende Teil (21) um das Fokusgebiet (F) zu drehen.

7. Anlage (1) nach dem vorhergehenden Anspruch, wobei die automatische Orientierungsvorrichtung (3) einen Photovoltaikwandler (33) aufweist zum Antreiben der Betätigungseinrichtung (31), die an dem reflektierenden Teil (21) befestigt ist, wobei der Wandler Paare von Photovoltaiksensoren aufweist, die unterschiedlich ausgerichtet und elektrisch verbunden sind, so dass die Potentialdifferenz zwischen den Zellen eines Paares von der Orientierung des reflektierenden Teils in Bezug auf die einfallende Strahlung abhängt.

8. Anlage (1) nach dem vorhergehenden Anspruch, wobei die automatische Orientierungsvorrichtung (3) für jedes Paar Zellen ein Relais (32) aufweist, dessen bewegliches Teil durch elektromagnetische Anziehung gemäß der Potentialdifferenz zwischen den Zellen wahlweise bewegt wird.

## Revendications

1. Installation thermique (1) comportant : un système de focalisation d'énergie solaire (2), comportant au moins un élément réflecteur (21), mis en forme de manière à focaliser un rayonnement incident sur une région de focalisation (F) du système et supporté des tirants d'assemblage (7) dudit au moins un élément réflecteur, lesdits tirants relient de manière rotative ledit élément réflecteur à ladite région de focalisation afin de permettre à l'élément réflecteur de suivre les mouvements quotidiens et/ou saisonniers du soleil, un échangeur thermique (5), positionné en correspondance avec ladite région de focalisation (F), et des moyens (4) pour alimenter de l'eau de traitement, capables d'alimenter ladite eau, sous une pression essentiellement égale ou supérieure à celle critique, dans ledit échangeur.

2. Installation thermique (1) selon la revendication précédente, dans laquelle ledit échangeur thermique (5) comporte un composant d'échange (51) essentiellement en forme de spirale.

3. Installation thermique (1) selon la revendication 1 ou 2, comportant une pluralité d'échangeurs thermiques (5) reliés en parallèle par lesdits moyens (4) pour alimenter de l'eau de traitement.

4. Installation (1) selon l'une quelconque des revendications précédentes, combinée à un échangeur thermique à l'intérieur d'un moteur à air chaud.

5. Installation (1) selon l'une quelconque des revendications précédentes, dans laquelle ledit au moins un élément réflecteur (21) comporte un corps principal (22) constitué d'une mousse de polystyrène et un film réflecteur (23) appliqué sur ledit corps principal.

6. Installation (1) selon l'une quelconque des revendications précédentes, comportant un dispositif d'orientation automatique (3) ayant une paire de câbles essentiellement orthogonaux et des moyens d'actionnement (31) pour ceux-ci, capables de tendre de manière sélective lesdits câbles afin de faire tourner l'élément réflecteur (21) autour de ladite région de focalisation (F).

7. Installation (1) selon la revendication précédente, dans laquelle ledit dispositif d'orientation automatique (3) comporte un transducteur photovoltaïque (33) pour entraîner lesdits moyens d'actionnement (31) fixés audit élément réflecteur (21), ledit transducteur comportant des paires de capteurs photovoltaïques orientés de manière différentielle et connectés électriquement, de sorte que la différence de potentiel entre les cellules d'une paire dépend de l'orientation de l'élément réflecteur par rapport au rayonnement incident.

8. Installation (1) selon la revendication précédente, dans laquelle ledit dispositif d'orientation automatique (3) comporte, pour chaque paire de cellules, un relais (32), l'élément mobile de celui-ci étant déplacé de manière sélective, par attraction électromagnétique , conformément à ladite différence de potentiel entre les cellules.
